(19) Europäisches Patentamt
European Patent Office
Office européen des brevets

(11) EP 3 725 155 B1

(12) # EUROPEAN PATENT SPECIFICATION

(45) Date of publication and mention of the grant of the patent:
**13.09.2023 Bulletin 2023/37**

(21) Application number: **19170070.7**

(22) Date of filing: **18.04.2019**

(51) International Patent Classification (IPC):
***A01N 43/78*** *(2006.01)* ***A01N 43/80*** *(2006.01)*
***C04B 28/14*** *(2006.01)* ***C04B 41/00*** *(2006.01)*
***C04B 41/46*** *(2006.01)* ***E04C 2/04*** *(2006.01)*

(52) Cooperative Patent Classification (CPC):
(C-Sets available)
**A01N 43/78; A01N 43/80; C04B 28/14; C04B 41/009; C04B 41/4535; C04B 41/62; E04C 2/526;** C04B 2103/69; C04B 2111/0062; C04B 2111/2092; E04C 2/043 (Cont.)

(54) **ANTIFUNGAL WALLBOARDS**

ANTIMYKOTIUM WANDBAUPLATTEN

PLAQUES DE PLÂTRE ANTIFONGIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.10.2020 Bulletin 2020/43**

(73) Proprietor: **LANXESS Deutschland GmbH
50569 Köln (DE)**

(72) Inventors:
- **Wachtler, Peter
47800 Krefeld (DE)**
- **Babenko, Olga
40822 Mettmann (DE)**
- **Uhr, Hermann
51373 Leverkusen (DE)**

(56) References cited:
**JP-A- 2003 267 806**
**US-A- 5 185 357**
**US-A1- 2015 203 660**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 725 155 B1



(Cont. next page)

(52) Cooperative Patent Classification (CPC): (Cont.)

C-Sets
**A01N 43/78, A01N 25/34, A01N 43/36, A01N 43/653, A01N 43/80;**
**A01N 43/80, A01N 25/34, A01N 43/36, A01N 43/653;**
**C04B 41/009, C04B 28/14;**
**C04B 41/4535, C04B 2103/69**

## Description

The present invention relates to wallboards comprising a gypsum core and a facing layer, containing a fungicidally effective amount of thiabendazole (hereinafter also referred to as TBZ) and 2-butyl-1,2-benzisothiazolin-3-one (hereinafter also referred to as BBIT), a method for making such wallboards and a paper product comprising a fungicidal mixure comprising as actives TBZ and BBIT.

The fungi of relevance to the invention are those which are capable of growing on building materials such as wallboards. Fungi are versatile organisms and the substrates on which they grow can include building materials since such materials can be made of, or have applied to them, substances which support fungal growth. Fungal growth generally requires dampness, that can be caused on building materials by, for example, internal water leaks or external leaks, or by areas of high humidity or condensation. Fungal growth also requires a food source which, in this case, can be the building material itself or can be dirt or other nutritious material present on the building material.

Fungi which are capable of growing on building materials such as wallboards have been problematic for some time. Obvious effects of such fungi are discoloration of the material on which they grow, often accompanied by unpleasant smells. Fungi also contribute to the physical destruction of the material. In recent years, such fungi have also been an increasing cause for concern in relation to human health. Various health problems have been attributed to such fungi with most common being allergic reactions and in some cases, human infection. Certain fungi which are capable of growing on such building materials are also thought to be carcinogenic. Clearly these fungi are perceived as a growing threat to humans.

Fungi are at least in part responsible for so-called 'black mould', a fungal infestation of buildings. Wallboard is particularly susceptible to black mould, which has become a significant problem in buildings in some areas, and which has been blamed for a range of human health problems. Fungi are also responsible for facilitating discoloration of the material on which they grow and are a particular problem in residential buildings.

In WO2006/134347 a mixture containing the actives azoxystrobin and thiabendazole has been proposed for preparing respective wallboards to resist the attack or growth of such microorganisms, in particular of fungi. However, it was found that even such beneficial treatment will not fulfill the ongoing demand for a higher resistance against microorganisms.

US2015/203660 teaches the possible combination of TBZ and another fungicide, including BBIT, for inclusion in PVC. However, no mention of paper products or wallboards is made.

JP2003/267806 teaches the inclusion of fungicides, including combinations thereof, in building materials, including cements, plaster and wallpapers. TBZ and BBIT are listed as possible fungicides. However, their combination is not explicitly disclosed.

Hence, the object of the present invention was to provide wallboards with a further improved capability to resist such attacks by or growth of microorganisms.

Surprisingly it was found that a wallboard comprising a gypsum core and a facing layer, in particular paper layer, containing a fungicidally effective amount of thiabendazole (TBZ) and 2-butyl-1 ,2-benzisothiazolin-3-one (BBIT) does show such an improvement.

### Wallboard:

Wallboard is generally in the form of a flat sheet, preferably between 0.5 and 5.5 cm thick and usually being a composite of a gypsum core and a facing layer, in particular paper or glass fibre mats. Preferably the wallboard has paper as facing layer whereby the core is coated on both sides with paper. The paper generally has a weight of 130 - 300 g/$m^2$, preferably 150 - 250 g/$m^2$.

A wallboard is normally used as a building material used to make the internal dividing walls of buildings. Buildings include residential buildings such as houses and flats and commercial buildings such as shops, warehouses, hotels and factories and the like, also institutional buildings such as colleges. Wallboard includes ceiling board which is material used for internal ceilings. Wallboard is usually fixed to a wooden or metal frame to form an internal wall, or fixed to ceiling spars to form an internal ceiling.

Wallboard has many desirable properties, such as being relatively light and easy to cut, and having a surface that is easily decorated with paint or wallpaper. However, wallboard suffers from a particular problem if it is exposed to water and for that reason its use is restricted to internal areas of buildings.

The gypsum core is very water-absorbent, and once it is wet can take a long time to dry out. The combination of a damp gypsum core and preferably starch contained in the core and the cellulose contained in the paper, in case the facing layer is paper provide an ideal substrate for fungi to grow. Essentially, the damp gypsum provides a convenient sustained water reservoir for the fungus while the paper provides nutrition. Even when used internally, wallboards can be exposed to water for example from leaky internal plumbing or from rainwater leaks from the outside of the building, or from sustained high humidity or condensation. Such leaks are unfortunately rather common and so fungal growth on

wallboards is a continuing and widespread problem. Another reason for wallboards becoming wet is insufficient storage and transport.

A wallboard is conventionally produced by enclosing a core of an aqueous slurry of calcined gypsum and optionally other components between one or more facing layers, like cellulose based paper or glass mat. The facing layer may comprise different materials. In one embodiment, the facing layer contains pulp fibers. In this regard, the facing layer may comprise a paper, such as a paperboard. In one embodiment, for instance, the facing layer may be made from recycled pulp fibers, such as recycled newsprint.

**Gypsum core**

The slurry used to make the core of wallboard preferably comprises calcined gypsum alone or in combination with various other materials. In one embodiment, for instance, the core may further include filler materials, binders, and the like.

Gypsum is typically obtained naturally from gypsum rock. The gypsum rock is normally ground to a desired fineness and then undergoes calcination. Calcination is performed by heating the gypsum rock in order to remove moisture and produce calcium sulfate hemihydrate. Calcium sulfate hemihydrate, when mixed with water, will set and form the core material.

Other components that can be present in the gypsum core are mentioned in the manufacturing part below as such components are normally already added to the gypsum slurry from which the gypsum core is formed.

The gypsum core is typically greater than 3.175 mm in thickness. The gypsum core can be preferably from 9.5 to 51 mm, in particular from 19 to 32 mm preferably from 13 to 25 mm in thickness.

**Paper as facing layer**

The paper facing can have a basis weight of generally 130 or more g/$m^2$, in particular 150 or more g/$m^2$, such as 170 or more g/$m^2$. The basis weight is generally 300 or less g/$m^2$, such as 270 or less g/$m^2$, such as 250 or less g/$m^2$. In an alternative embodiment, the facing layer paper may comprise starch or a starch layer. In another embodiment, starch may be used to attach a pulp containing facing layer to the core material.

In case paper is used as facing layer, the paper can be used as single or multi-layered facing, whereby, the fungicide can be included in or on any paper layer. Preferably the biocide is included in or on the outer 1 to 3 layers of the multi-layered facing paper.

**Actives**

The active substance thiabendazole (TBZ) is represented by the following formula and is already known under the CAS number 148-79-8 and for agricultural applications from EP2499911.

**Formula of thiabendazole** (in the following also referred to as TBZ):

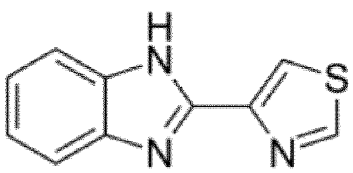

The active substance 2-butyl-1,2-benzisothiazolin-3-one (in the following also referred to as BBIT) is represented by the following formula and is already known under the CAS number 4299-07-4.

Formula of BBIT:

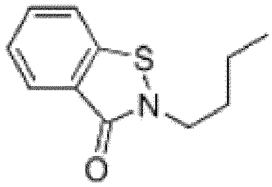

### Amount/Ratio

Preferably the wallboard of the present invention comprises TBZ, BBIT without or with one or more other actives, in particular actives selected from the group consisting of difenoconazole and fludioxonil (the latter hereinafter also referred to as FDL), whereby the total amount of antimicrobial active ingredients in the wallboard is from 10 to 2000 ppm, preferably from 50 to 1000 ppm, even more preferred from 80 to 1000 ppm, in particular from 150 to 1000 ppm. If only applied to the gypsum core of the wallboard the total amount of actives in the wallboard is from 10 to 1000 ppm, preferably from 50 to 1000 ppm, even more preferred from 80 to 1000 ppm, in particular from 150 to 1000 ppm, preferably from 25 to 500 ppm. When applied only to the to the paper facings, the total amount of actives is from 100 to 3000 ppm, preferably from 200 to 2000 ppm. Alternatively, if only applied to the gypsum core of the wallboard the total amount of actives in the wallboard based on gypsum / plaster ($CaSO_4 \times 0,5\ H_2O$) is from 10 to 1000 ppm, preferably from 50 to 1000 ppm, even more preferred from 80 to 1000 ppm, in particular from 150 to 1000 ppm, preferably from 25 to 500 ppm.

The actives may be contained in the gypsum core, the facing layer, in particular the paper or in both composite parts.

Preferably the TBZ, BBIT and optionally one or more other active is contained in the gypsum core or the paper coating.

The weight ratio of the fungicides TBZ and BBIT in the wallboard is preferably from 20:1 to 1:20, in particular from 10:1 to 1:5, preferably from 5:1 to 1:5. The wallboard of the present invention may not contain other actives than TBZ and BBIT or may contain further actives. Preferably such other present actives may be one or more selected from the group consisting of difenoconazole and fludioxonil, in particular fludioxonil (hereinafter referred to as FDL).

The wallboard of the present invention preferably consist based on the total amount of actives more than 80 wt.-%, preferably more than 90 wt.-%, in particular more than 95 wt.-%, even more preferred more than 99 wt.-%, in particular 100 wt.% of TBZ and BBIT or of TBZ, BBIT and at least one further active in particular selected from the group consisting of difenoconazole and fludioxonil, in particular fludioxonil (FDL).

In a preferred embodiment of the present invention the weight ratio of the sum of TBZ and BBIT with other actives, preferably FDL is from 100 : 1 to 2 : 1, in particular from 50 : 1 to 5 : 1.

### Fungi/Microorganism

The fungicidal mixtures according to this invention generally exhibit a broad spectrum efficacy against all sorts of fungi and yeasts including commonly known spoilage organisms for wallboard *like Neosatorya, Aspergillus, Chaetomium, Penicillium, or Stachybotris*

The wallboard of the present invention shows in particular good properties with respect to tested fungus of the ASTM G21 test of 2009 wherein the following fungus are collectively tested: *Aspergillus niger, Aureobasidium pullulans, Chaetomium globosum, Gliocladium virens and Penicillium pinophilium.*

Without limitation, the wallboard of the present invention is furthermore protected against other fungi of particular concern are: Alternaria alternata, Alternaria tenuissima, Aspergillus versicolor, Cladosporium cladosporioides, Coniophora puteana, Gloeophyllum trabeum, Memnionella echinata, Mucor indicus, Oligoporus placenta, Penicillium citrinum, Penicillium chrysogenum, Penicillium funiculosum, Sclerophoma phytiophila, Stachybotrys atra, Stachybotrys chartarum, and Ulocladium chartarum.

### Process for making wallboards

The present invention still further provides a method for making the wallboard of the present invention, wherein the wallboard is treated with mixtures of TBZ and BBIT with or without other actives, preferably wherein TBZ, BBIT and optional further actives are contained in a mixture, during the manufacturing process of said wallboard and/or by incorporating fungicide into the facing layer like paper by methods known to those skilled in the art. During the manufacturing process the actives, preferably a mixture containing TBZ, BBIT with or without further actives, can be added

a) to a gypsum slurry before the gypsum core is formed and/or
b) to the surface of the gypsum core of the wallboard before the facing layer, in particular the paper is applied and/or
c) to the facing layer making process, in particular the paper making process, preferably to the paper pulp and/or
d) to the surface of the facing layer, in particular the paper layer.

When producing the wallboard of the present invention, a slurry, preferably aqueous slurry, of calcined gypsum and other components can be continuously deposited between two facing layers, preferably paper. The slurry can contain any calcined gypsum including calcium sulfate hemihydrate, calcium sulfate anhydrite or both. Calcium sulfate hemihydrate can produce at least two crystal forms, the alpha and beta forms. Beta or alpha calcium sulfate hemihydrate may be used.

The slurry preferably contains 30 to 55 wt.-%, preferably from 35 to 45 wt.-% of water.

In some embodiments, additives are included in the gypsum slurry to modify one or more properties of the final product. Such additives can include starches, defoamers, surfactants, dispersants and the like. Such additives can include naphthalene sulfonates and wax emulsions.

A trimetaphosphate compound can be added to the gypsum slurry in some embodiments to enhance the strength of the product and to reduce sag of the set gypsum. The concentration of the trimetaphosphate compound can be from about 0.1 percent to about 2.0 percent based on the weight of the calcined gypsum. Exemplary trimetaphosphate salts include sodium, potassium or lithium salts of trimetaphosphate.

In addition, the gypsum slurry optionally can include a starch, such as a pregelatinized starch or an acid-modified starch. The inclusion of the pregelatinized starch increases the strength of the set and dried gypsum cast and minimizes or avoids the risk of paper delamination under conditions of increased moisture (e.g., with regard to elevated ratios of water to calcined gypsum). The pregelatinized starch can be added to the mixture used to form the set gypsum composition such that it is present in an amount of from 0.5 to 10 percent by weight of the set gypsum slurry.

The present invention still further provides a method as described above in which the fungicides are applied to the gypsum slurry before hardening.

The present invention still further provides a method as described above in which the fungicides are applied to the surface of the gypsum core of the wallboard.

The present invention still further provides a method as described above wherein the fungicides are included in the paper facing of the wallboard. The fungicide may be added during any stage of the paper manufacturing process, including at the "wet-end" (e.g. thick stock, thin stock, machine chest, head box), or at the "dry-end" after the paper is formed such as by dipping, spraying, or other surface coating techniques (e.g. size press, calender stack, water box, spray bar, off-machine coater).

The present invention still further provides a method as described above wherein the fungicides are applied to the paper after said paper has been made, such as by dipping, spraying, or other surface coating techniques (e.g. size press, calender stack, water box, spray bar, off-machine coater).

The present invention still further provides a method as described above wherein the finished or substantially finished wallboard is treated with the fungicides.

The present invention still further provides a method as described above wherein the wallboard is treated with the fungicides prior to installation of said wallboard.

The present invention still further provides a wallboard obtained by either method as described above.

**Fungicide Mixture:**

A mixture containing TBZ, BBIT without or with further actives as described above, that is preferably used to make the wallboard according to the present invention can be based on organic solvents and/or can be water based. Organic solvents can have the advantage of being easier to handle, but water-based compositions are preferred because of their lower air pollution potential, and lower odour, particularly for in-door applications in buildings. One example of a suitable water-based composition is a suspension, in particular a suspension concentrate.

The composition can be chosen from a number of formulation types, including water dispersible granules (WG), wettable powders (WP), granules (GR) (slow or fast release), soluble concentrates (SL), oil miscible liquids (OL), ultra-low volume liquids (UL), emulsifiable concentrates (EC), dispersible concentrates (DC), emulsions (both oil in water (EW) and water in oil (EO)), micro-emulsions (ME), suspension concentrates (SC), and other applicable formulations well known to the person skilled in the art.

Wettable powders (WP) may be prepared by mixing the fungicides with one or more solid diluents or carriers, one or more wetting agents and, preferably, one or more dispersing agents and, optionally, one or more suspending agents to facilitate the dispersion in liquids. The mixture is then ground to a fine powder. Similar compositions may also be granulated to form water dispersible granules (WG).

Granules (GR) may be formed either by granulating a mixture of the fungicides according to the invention and

one or more powdered solid diluents or carriers, or from pre-formed blank granules by absorbing a fungicide/or the fungicides according to the invention (or a solution thereof, in a suitable agent) in a porous granular material (such as pumice, attapulgite clays, fuller's earth, kieselguhr, diatomaceous earths or ground corn cobs) or by adsorbing a fungicide/fungicides according to the invention (or a solution thereof, in a suitable agent) on to a hard core material (such as sands, silicates, mineral carbonates, sulphates or phosphates) and drying if necessary. Agents which are commonly used to aid absorption or adsorption include solvents (such as aliphatic and aromatic petroleum solvents, alcohols, ethers, ketones and esters) and sticking agents (such as polyvinyl acetates, polyvinyl alcohols, dextrins, sugars and vegetable oils). One or more other additives may also be included in granules (for example an emulsifying agent, wetting agent or dispersing agent).

Dispersible Concentrates (DC) may be prepared by dissolving the fungicides according to the invention in water or an organic solvent, such as a ketone, alcohol or glycol ether. These solutions may contain a surface-active agent (for example to improve water dilution or prevent crystallization in a spray tank). Emulsifiable concentrates (EC) or oil-in-water emulsions (EW) may be prepared by dissolving the fungicides according to the invention in an organic solvent (optionally containing one or more wetting agents, one or more emulsifying agents or a mixture of said agents). Suitable organic solvents for use in ECs include aromatic hydrocarbons (such as alkylbenzenes or alkylnaphthalenes, exemplified by SOLVESSO 100, SOLVESSO 150 and SOLVESSO 200; SOLVESSO is a Registered Trade Mark), ketones (such as cyclohexanone or methyl cyclohexanone), alcohols (such as benzyl alcohol, furfuryl alcohol or butanol), N-alkylpyrrolidones (such as N-methylpyrrolidone or N-octylpyrrolidone), dimethyl amides of fatty acids (such as $C_8$-$C_{10}$ fatty acid dimethylamide) and chlorinated hydrocarbons. An EC product may spontaneously emulsify on addition to water, to produce an emulsion with sufficient stability to allow spray application through appropriate equipment. Preparation of an EW involves obtaining a fungicide/fungicides according to the invention either as a liquid (if it is not a liquid at room temperature, it may be melted at a reasonable temperature, typically below 70 degrees centigrade) or in solution (by dissolving it in an appropriate solvent) and then emulsifying the resultant liquid or solution into water containing one or more SFAs, under high shear, to produce an emulsion. Suitable solvents for use in EWs include vegetable oils, chlorinated hydrocarbons (such as chlorobenzenes), aromatic solvents (such as alkylbenzenes or alkylnaphthalenes) and other appropriate organic solvents that have a low solubility in water.

Microemulsions (ME) may be prepared by mixing water with a blend of one or more solvents with one or more SFAs, to produce spontaneously a thermodynamically stable isotropic liquid formulation. A fungicide/fungicides according to the invention is present initially in either the water or the solvent/SFA blend. Suitable solvents for use in MEs include those hereinbefore described for use in ECs or in EWs. An ME may be either an oil-in-water or a water-in-oil system (which system is present may be determined by conductivity measurements) and may be suitable for mixing water-soluble and oil-soluble pesticides in the same formulation. An ME is suitable for dilution into water, either remaining as a microemulsion or forming a conventional oil-in-water emulsion.

Suspension concentrates (SC) may comprise aqueous or non-aqueous suspensions of finely divided insoluble solid particles of the fungicides according to the invention. SCs may be prepared by ball or bead milling fungicides according to the invention in a suitable medium, optionally with one or more dispersing agents, to produce a fine particle suspension of the compound. The solid content of such a suspension concentrate is preferably in the range of 20 to 60 wt.%. One or more wetting agents may be included in the composition and a suspending agent may be included to reduce the rate at which the particles settle. Alternatively, the fungicides may be dry milled and added to water, containing agents hereinbefore described, to produce the desired end product.

Most preferable the fungicide mixture is a water based suspension concentrate.

The fungicide mixture may include one or more additives to improve the properties of the composition (for example by improving wetting, retention or distribution on surfaces; or absorption into surfaces). For the additives specified below, there is in each case independently of one another also the possibility that they are not present.

interface-active substances, such as, for example, surfactants. Surfactants may be, for example, non-ionic, anionic, cationic and amphoteric surfactants.

Anionic surfactants are, for example, alkyl sulphates, alkyl ether sulphates, alkyl-arylsulphonates, alkyl succinates, alkyl sulphosuccinates, N-alkoyl sarcosinates, acyl taurates, acyl isethionates, alkyl phosphates, alkyl ether phosphates, alkyl ether carboxylates, alpha-olefinsulphonates, in particular the alkali metal and alkaline earth metal salts, for example sodium, potassium, magnesium, calcium, and also ammonium and triethanolamine salts. The alkyl ether sulphates, alkyl ether phosphates and alkyl ether carboxylates can in each case have for example from 1 to 10 ethylene oxide or propylene oxide units, preferably 1 to 3 ethylene oxide units. Sodium lauryl sulphate, ammonium lauryl sulphate, sodium lauryl ether sulphate, ammonium lauryl ether sulphate, sodium lauryl sarcosinate, sodium oleyl succinate, ammonium lauryl sulphosuccinate, sodium dodecyl benzenesulphonate, triethanolamine dodecylbenzenesulphonate, for example, are suitable.

Nonionic emulsifiers are, for example, alkylaryl polyglycol ethers, such as polyoxyethylene octylphenol ether, ethoxylated isooctyl-, octyl- or nonylphenol, alkylphenol or tributylphenyl polyglycol ethers, trissteryl phenyl ether ethoxylates, alkylaryl polyether alcohols, isotridecyl alcohol, polyoxyethylene-fatty alcohol ethers, polyoxyethylene-fatty acid

esters such as, for example, ethoxylated castor oil, polyoxyethylenealkyl ethers or polyoxypropylene, lauryl alcohol polyglycol ether acetate, sorbitol esters or block copolymers based on ethylene oxide and/or propylene oxide.

The antifoams used are generally interface-active substances which are weakly soluble in the surface-active solution. Preferred antifoams are those which are derived from natural fats and oils, petroleum derivatives or silicone oils.

Wetting agents, such as, for example, alkali metal, alkaline earth metal, ammonium salts of aromatic sulphonic adds, for example lignin-, phenol-, naphthalene- and dibutylnaphthelenesulphonic add, and also of fatty adds, alkyl- and alkylarylsulphonetes, alkyl, lauryl ether and fatty alcohol sulphates, and salts of sulphated hexa-, hepta- and octedecanols or fatty alcohol glycol ethers, condensation products of sulphonated naphthalene and its derivatives with formaldehyde, condensation products of naphthalene or of naphthalene sulphonic adds with phenol and formaldehyde, polyoxyethylene octyl phenol ether, ethoxylated isooctyl-, octyl- or nonylphenol, alkylphenol or tributylphenyl polyglycol ether, trissteryl phenyl ether ethoxylates, alkylaryl polyether alcohols, isotridecyl alcohol, fatty alcohol ethylene oxide condensates, ethoxylated castor oil, polyoxyethylene alkyl ether and polyoxypropylene, lauryl alcohol polyglycol ether acetate, sorbitan esters, lignosulphite waste liquors or methylcellulose.

Emulsifiers, such as, for example, sodium, potassium and ammonium salts of straight-chain aliphatic carboxylic adds of chain length $C_{10}$-$C_{20}$. Sodium hydroxyoctadecanesulphonate, sodium, potassium and ammonium salts of hydroxy fatty adds of chain length $C_{10}$-$C_{20}$ and their sulphation or acetylation products, alkyl sulphates, also as triethanolamine salts, alkyl-($C_{10}$-$C_{20}$)-sulphonates, alkyl-($C_{10}$-$C_{20}$)-arylsulphonates, dimethyldialkyl-($C_8$-$C_{18}$)-ammonium chloride, acyl, alkyl, oleyl and alkylaryl oxethylates and their sulphation products, alkali metal salts of sulphosuccinc acid esters with aliphatic saturated monohydric alcohols of chain length $C_4$-$C_{18}$, sulphosuccinic acid 4-esters with polyethylene glycol ethers of monohydric aliphatic alcohols of chain length $C_{10}$-$C_{12}$ (disodium salt), sulphosuccinic acid 4-esters with polyethylene glycol nonyl phenyl ether (disodium salt), sulphosuccinic acid bis-cyclohexyl ester (sodium salt), ligninosulphonic acid, and calcium, magnesium, sodium and ammonium salts thereof, polyoxyethylene sorbitan monooleate with 20 ethylene oxide groups, resin acids, hydrogenated and dehydrogenated resin acids, and alkali metal salts thereof, dodecylated diphenyl ether disulphonic acid sodium, and copolymers of ethylene oxide and propylene oxide with a minimum content of 10% by weight ethylene oxide. Preferably, the emulsifiers used are: sodium lauryl sulphate, sodium lauryl ether sulphate, ethoxylated (3 ethylene oxide groups); the polyethylene glycol (4-20) ethers of oleyl alcohol, and the polyethene oxide (4-14) ethers of nonylphenol.

Adhesives or protective colloids, such as, for example, carboxymethylcellulose, natural and synthetic pulverulent, granular or latex-like polymers, such as gum arabic, polyvinyl alcohol, polyvinyl acetate, and natural phospholipids, such as cephalins and lecithins and synthetic phospholipid, and paraffin oils.

Spreading agents, such as, for example, isopropyl myristate polyoxyethylene nonyl phenyl ether and polyoxyethylene lauryl phenyl ether.

Dyes, such as, for example, inorganic pigments, for example iron oxide, titanium oxide, Prussian blue and organic dyes, such as alizarine, azo and metallophthalocyanine dyes. Solid auxiliaries such as for example natural stone flours, such as kaolins, clay earths, talc, marble, chalk, quartz, attapulgite, montmorillonite or diatomaceous earth or synthetic inorganic substances, such as highly disperse silica, aluminum oxide and silicates, or mixtures thereof. Buffer substances, buffer systems or pH regulators.

Thickeners, such as, for example, polysaccharides, xanthan gum, sodium or magnesium silicates, heteropolysaccharides, alginates, carboxymethylcellulose, gum arabic or polyacrylic acids, preferably xanthan gum.

Pack preservatives are, for example, biocides and bactericides. However, preferably no other actives than fungicides, in particular TBZ and BBIT are used.

The fungicidal mixtures used in the wallboardsor paper product of the present invention may contain other compounds having biological activity, for example compounds having similar or complementary fungicidal activity or which possess, insecticidal and/or acaricidal and/or algicidal activity. The fungicide can be combined with other fungicides. Combinations with other fungicides can be used to control a broader range of fungi, which is particularly useful if multiple species of fungi are present, or if the species is not known.

The addition of another active ingredient may provide a fungicide mixture having a broader spectrum of activity or increased persistence at a locus, synergize the activity or complement the activity (for example by increasing the speed of effect or overcoming repellency) of the fungicides according to the invention, or help to overcome or prevent the development of resistance to individual components.

Examples of fungicidal compounds which may be included in the fungicide mixture of the invention are:
triazoles such as: azaconazole, azocyclotin, bitertanol, bromuconazole, cyproconazole, diclobutrazole, difenoconazole, diniconazole, epoxyconazole, etaconazole, fenbuconazole, fenchlorazole, fenethanil, fluquinconazole, flusilazole, flutriafol, furconazole, hexaconazole, ipconazole, isozofos, myclobutanil, metconazole, paclobutrazol, penconazole, propioconazole, prothioconazole, simeconazole, tebuconazole, tetraconazole, triadimefon, triadimenol, triapenthenol, triflumizole, triticonazole, uniconazole and their metal salts and acid adducts; imidazoles such as: clotrimazole, bifonazole, climbazole, econazole, fenapamil, imazalil, isoconazole, ketoconazole, lombazole, miconazole, oxpoconazole, perfurazoate, prochloraz, triflumizole, thiazolcar, and their metal salts and acid adducts; succinate-dehydrogenase inhibitors

such as: benodanil, benzovindiflupyr, , boscalid, carboxim, carboximsulfoxid, cyclafluramid, fenfuram, flutolanil, fluxapyroxad, furametpyr, furcarbanil, furmecyclox, isofetamid, isopyrazam, mebenil, mepronil, methfuroxam, metsulfovax, nicobifen, oxycarboxin, penthiopyrad, pyrocarbolid, oxycarboxin, pydiflumetofen, , seedvax, thifluzamide; benzimidazoles and carbamates such as:
Carbendazim morpholinederivatives such as: aldimorph, dimethomorph, dodemorph, falimorph, fenpropidin, fenpropimorph, flumorph, pyrimorph, tridemorph, trimorphamid and their arylsulfonic acid salts, like p-toluolsulfonic acid and p-dodecylphenyl-sulfonic acid; benzamide such as: 2,6-dichloro-N-(4-trifluoromethylbenzyl)-benzamide, tecloftalam, zoxamide; boric compounds such as: boric acid, boric acid esters, borax; dicarboximides such as: chlozolinate, dimethachlone, iprodione, procymidone, vinclozolin; isothiazolinones such as: 4,5-dichloro-N-octylisothiazolin-3-one, N-octylisothiazolin-3-one, iodo derivatives such as:
diiodomethyl-p-tolylsulfone, 3-iodo-2-propinyl-alcohol, 4-chlorophenyl-3-iodopropargyl-formal, 3-bromo-2,3-diiodo-2-propenylethylcarbamate, 2,3,3-triiodo-allylalcohol, 3-bromo-2,3-diiodo-2-propenylalcohol, 3-iodo-2-propinyl-n-butylcarba-mate, 3-iodo-2-propinyl-n-hexylcarbamate, 3-iodo-2-propinyl-cyclohexylcarbamate, 3-iodo-2-propinyl-phenylcarbamate; phenoles such as: triclosan, diclosan, hexachlorophen, p-hydroxybenzoic acid ester, o-phenylphenol, m-phenylphenol, p-phenylphenol, 4-(2-tert.-butyl-4-methyl-phenoxy)-phenol, 4-(2-isopropyl-4-methyl-phenoxy)-phenol, 4-(2,4-dimethyl-phenoxy)-phenol, 4-tert.-amyl-phenol und their alkali- and alkaline earth salts; pyridines and pyrimidines such as: buthiobate, fenarimol, 1-hydroxy-2-pyridinthion (and their Cu-, Na-, Fe-, Mn-, Zn-salts), mepanipyrin, nuarimol, tetrachloro-4-methylsulfonylpyridine, mepanipyrim, dipyrithion, 1-hydroxy-4-methyl-6-(2,4,4-trimethylpentyl)-2(1H)-pyridine, pyroxyfur, pyrifenox, pyrisoxazole; methoxyacrylates or similar compounds such as: coumoxystrobin, dimoxystrobin, enoxastrobin, famoxadone, fenaminstrobin, flufenoxystrobin, kresoxim-methyl, metominostrobin, orysastrobin, praoxystrobin, pyraclostrobin, pyrametostrobin, pyribencarb, triclopyricarb, 2,4-dihydro-5-methoxy-2-methyl-4-[2-[[[[1-[3-(trifluoromethyl)phenyl]-ethylidene]amino]oxy]methyl] phenyl]-3H-1,2,4-triazol-3-one (CAS-Nr. 185336-79-2) metal soaps such as: salts of metals tin, copper and zinc with higher fatty acids , resins-, naphthenoic acids and phosphoric acid such as tin-, copper-, zincnaphtenate, -octoate, 2-ethylhexanoate, -oleate, phosphate, -benzoate; oxides such as: oxides of the metals tin, copper and zinc, such as, for example, tributyltin oxide, $Cu_2O$, CuO, ZnO; dithiocarbamates such as: cufraneb, ferban, sodium-N-hydroxymethyl-N'-methyl-dithiobarbamate, Na- oder K-dimethyldithiocarbamate, mancozeb, maneb, metam, metiram, thiram, zineb, ziram; pyrroles such as: fenpiclonil, nitriles such as: 2,4,5,6-tetrachloroisophthalodinitrile, other fungicides such as: ametoctradin, amisulbrom, aethozaxin, benthiavalicarb, bupirimate, dimethirimol, ethirimol, etridiazole, cyazofamid, ethaboxam, iprovalicarb, fenpyrazamine, fluazinam, spiroxamine, carpropamid, diflumetorin, quinoxyfen, oxadxyl, ofurace, polyoxorim, polyoxin, piperalin, propamocarb, prothiocarb, acibenzolar-S-methyl, pencycuron, phenamacril thifluzamide, methalaxyl-M, benalaxyl-M, furalaxyl, benthiavalicarb, metrafenone, cyflufenamid, tiadinil, teatree oil, silthiofam, tolfenpyrad, triforine, fenarimol, nuarimol, pyributicarb, valifenalate, most preferrable are fungicides such as: azaconazole, bromuconazole, cyproconazole, dichlobutrazol, diniconazole, hexaconazole, metconazole, penconazole, propiconazole, tebuconazole, triadimefon, fenpiclonil, butenafine, imazalil, N-octylisothiazolin-3-one, zinc-pyrithione, sodium-pyrithione, carbendazim, and/or 3-iodo-2-pro-pinyl-n-butylcarbamate.

**Further Mixtures**

According to the invention, the wallboard or paper product as described above comprising TBZ and BBIT, may further comprise one or more actives selected from the group consisting of difenoconazole and fludioxonil.

With regard to the preferred embodiments of the mixture of the present invention the above mentioned features for actives in the wallboard shall also apply here.

In particular, the weight ratio of the fungicides weight ratio of the sum of TBZ and BBIT with another fungicide, in particular fludioxonil is from 100 : 1 to 2 : 1 in particular from 50:1 to 5:1.

Preferably the amount of TBZ, BBIT and optionally another active, preferably selected from the group consisting of difenoconazole and fludioxonil, based on the total amount of actives in the fungicide mixture consists of more than 80 wt.-%, preferably more than 90 wt.-%, in particular more than 95 wt.-%, more preferably more than 98 wt.-%, in particular 100 wt.%. Preferably the fungicide mixture of the present invention does contain TBZ and BBIT as the only fungicides, preferably as the only actives.

The weight ratio of the fungicides TBZ : BBIT is from 20 : 1 to 1 : 20, in particular from 10 : 1 to 1 : 5, more preferably from 5:1 to 1:5. The mixture may also contain further ingredients as described above.

The mixture is for protecting wallboards against the attack and growth of microorganism. The protection may be done in the ways as described above.

Suitable carriers and adjuvants may be solid or liquid and are, for example, natural or regenerated mineral substances, solvents, dispersants, wetting agents, tackifiers, thickeners, binders or fertilisers. They are conveniently formulated in known manner to form, for example, emulsifiable concentrates, coatable pastes, directly sprayable or dilutable solutions, dilute emulsions, wettable powders, soluble powders, dusts, granules or capsules, for instance by encapsulation in polymers substances. As with the nature of the fungicide mixture, the method of application, such as

spraying, atomizing, dusting, scattering, coating or pouring, is chosen in accordance with the prevailing circumstances.

The fungicide mixtures may be prepared in known manner, typically by intimately mixing, grinding and/or extruding the fungicide/fungicides according to the invention with an extender, for example, a solvent or a solid or liquid carrier and, where appropriate, one or more surface-active compounds (surfactants).

In a still further aspect of the invention there is provided a paper product comprising a fungicide mixture which comprises as active ingredients TBZ and BBIT without or with one or more actives selected from the group consisting of difenoconazole and fludioxonil. The mixture may be applied to the material referred to above in a manner as described above and the fungicides may be applied in a ratio as defined in the examples.

The invention will now be described with reference to the following examples:

EXAMPLES

**Example 1**: Synergism of mixtures of thiabendazole (TBZ) and butylbenzthiazole (BBIT)

The term synergism is used when the action of a combination of antimicrobial substances is being evaluated. When combining two different actives, several different effects may occur, which usually cannot be foreseen, but have to be determined by adequate testing:

- Additive effect
  The additive effect of a combination of antimicrobial substances is one in which the effects of the combination is equal to that of the sum of the effect of the individual components.
- Synergistic effect
  Synergistic action of a combination of antimicrobial substances is present if the effect of the combination exceeds the additive effects of the individual components.
- Antagonistic effect
  Antagonism is present if a reduced effect of a combination of antimicrobial substances is observed in comparison with the effect of the most effective individual substance.

The synergism found for the mixture according to the invention can be determined via the following mathematical mathematical formula (cf. F. C. Kull, P. C. Elisman, H. D. Sylwestrowicz and P. K. Mayer, Appl. Microbiol. 9, 538 (1961):

$$\text{synergistic index } (SI) = \frac{Q_a}{Q_A} + \frac{Q_b}{Q_B}$$

where

Qa = amount of component A in the active substance mixture which achieves the desired effect, i. e. no microbial growth,
$Q_A$=amount of component A which, when used alone, suppresses the growth of the microorganisms,
Qb=amount of component B in the active substance mixture which suppresses the growth of the microorganisms,
$Q_B$ =amount of component B which, when used alone, suppresses the growth of the micro-organisms

If the sum of the ratios for a mixture $Qa/Q_A + Q_b/Q_B = 1$, additivity is indicated; if it is <1, synergism has occurred; a value of >1 is indicative of antagonism. Synergism of thiabendazole and butylbenzisothiazolinone.

To determine the antimicrobial efficacy and synergy of combinations, the Minimum Inhibitory Concentrations (MIC) of the active substances and their respective combinations were determined. The Minimum Inhibitory Concentrations of a given antimicrobial compound is the lowest concentration expressed in mg/mL (ppm) that under defined in vitro conditions prevents the growth of a given micro-organism (for example bacteria, mould fungi, yeasts).The growth of the microorganisms is observed on petri dishes containing a defined nutrient agar. In the case of fungi, typical strains according to this test design for example would be species like those as indicated in table 1

Table 1: MIC of TBZ / BBIT mixtures

| Microorganism | **TBZ** | **BBIT** | **TBZ: BBIT 4:1** | **SI4 : 1** | **TBZ: BBIT 4:2** | **SI4 : 2** | **TBZ: BBIT 4:3** | **SI4 : 3** | **TBZ: BBIT 4:4** | **SI4 : 4** |
|---|---|---|---|---|---|---|---|---|---|---|
| *Aspergillus niger* | 100 | 50 | 50 | 0,8 | 50 | 0,66 | 10 | 0,15 | 50 | 0,75 |

(continued)

| Microorganism | **TBZ** | **BBIT** | **TBZ: BBIT 4:1** | **SI4 : 1** | **TBZ: BBIT 4:2** | **SI4 : 2** | **TBZ: BBIT 4:3** | **SI4 : 3** | **TBZ: BBIT 4:4** | **SI4 : 4** |
|---|---|---|---|---|---|---|---|---|---|---|
| *Aureobasidium pullulans* | 50 | 5 | 5 | 0,28 | 5 | 0,41 | 5 | 0,48 | 5 | 0,55 |
| *Chaetomium globosum* | 5 | 25 | 5 | 0,84 | 5 | 0,73 | 5 | 0,66 | 5 | 0,6 |
| *Gliocladium virens* | 25 | 25 | 5 | 0,24 | 10 | 0,4 | 5 | 0,2 | 5 | 0,2 |

As can be seen in table 1, by the combination of TBZ with BBIT there can be achieved, depending on fungal species and ratios, noticeable synergistic performance effects, indicated by SI values of < 1.

**Example 2:** Gypsum board hand sheet efficacy testing (core protection)

For examination of the antifungal performance of the TBZ/BBIT combinations testing directly in gypsum boards provides realistic and practically relevant data for evaluation. To achieve these data, gypsum boards were produced in the laboratory. For this purpose, a typical slurry recipe as given below for board production is used.

Gypsum Board recipe:

Slurry components:

| | |
|---|---|
| Gypsum / plaster ($CaSO_4 \times 0,5\ H_2O$) | 9500 g |
| Tap water | 5700 g |
| Starch | 285 g |

The slurry is formed by mixing the dry components and the wet components together. The slurry is then mixed to achieve a homogeneous consistency. The fungicides are incorporated during preparation of the gypsum slurry by adding and mixing the fungicidal mixtures. For sandwiching the gypsum core, untreated cardboard (without fungicide) with a grammage of appr. 180 g/m$^2$ was used and after assembly of the plate the hand sheets are dried.The following antifungal compounds and respective formulations were used:

- Thiabendazole
- Butylbenzthiazole

For efficacy testing a test method of ASTM G 21 of 2009 was applied. As only change additional to the fungi mix as required by ASTM G 21-09, *Fusarium solani* and *Aspergillus hiratsukae* were included as further components of the mixed inoculum. According to this method, the manufactured gypsum boards as described above and after having been cut to an adequate size are placed on an agarplate and superficially are spoiled with fungal spores for a determined period of time of at the most 4 weeks. The respective total amount of actives in ppm based in gypsum / plaster ($CaSO_4 \times$ 0,5 $H_2O$) can be seen in the table.

Spore suspensions are produced for each fungi (spore concentrations of approximately 10$^6$/ml). Organisms which are included in ASTM G 21 comprise *Aspergillus niger* (ATCC 9642), *Aureobasidium pullulans* (ATCC 15233) *Chaetomium globosum* (ATCC 6205), *Gliocladium virens* (ATCC 6459) and *Penicillium pinophilium (ATCC 11797)* (as pure culture but also as mixed inoculum), however any other fungi species known to be able to grow in gypsum boards may be used in addition or instead. Mineral agar (according to ASTM G21 of 2009) was used as growth media in the agar plates. Before inoculation the gypsum board hand sheets are cut into pieces of appr. 5 × 5 cm.

For every concentration level, 3 test pieces are used in the test. Each sample is placed in a separate petri dish and then inoculated with the fungi. The samples are then incubated at 28 - 30°C for 28 days. Pre-reading of the samples may be performed at approximately 10 days after inoculation. The activity of the treatments may be assessed visually,

using a rating system of 0 - 4 for growth inhibition of fungal growth.

| Observed Growth | Rating |
|---|---|
| None | 0 |
| Traces of growth (less than 10%) | 1 |
| Light growth (10 to 30 %) | 2 |
| Medium growth (30 to 60 %) | 3 |
| Heavy growth (60 % to complete coverage) | 4 |

Results:

The reported results are recorded after 4 weeks testing at 28 - 30 °C according to the requirements of test method ASTM G 21 can be seen from Table 2:

Table 2 Gypsum board hand sheet efficacy testing

| | **ppm** | **Fungi Mix1)** | **Stachybotris2)** |
|---|---|---|---|
| **control sample** | ***0*** | ***4*** | ***4*** |
| **TBZ** | ***25*** | ***4*** | ***4*** |
| **TBZ** | ***50*** | ***4*** | ***4*** |
| **TBZ** | ***100*** | ***4*** | ***4*** |
| **TBZ** | ***200*** | ***4*** | ***4*** |
| **TBZ** | ***300*** | ***3*** | ***3*** |
| | | | |
| **TBZ-BBIT 1,3 : 1** | **25** | **4** | **4** |
| **TBZ-BBIT 1,3 : 1** | **50** | **4** | **4** |
| **TBZ-BBIT 1,3 : 1** | ***100*** | **4** | **3** |
| **TBZ-BBIT 1,3 : 1** | ***200*** | **1** | **0** |
| **TBZ-BBIT 1,3 : 1** | ***300*** | **0** | **0** |
| | | | |
| **BBIT** | ***25*** | ***4*** | ***4*** |
| **BBIT** | ***50*** | ***4*** | ***4*** |
| **BBIT** | ***100*** | ***4*** | ***4*** |
| **BBIT** | ***200*** | ***2*** | ***2*** |
| **BBIT** | ***300*** | ***1*** | ***1*** |

1) The Fungi Mix as indicated in table 2 is composed of the standard ASTM G 21-09 species extended by fungal species *Fusarium solani and Aspergillus hiratsukae*
2) Stachybotris means *Stachybotris chartarum*

Interpretation of table 2:

The control sample (no fungicide in the gypsum core) exhibits heavy growth of fungi. TBZ alone in the tested concentration range is not good enough for control of fungi growth. BBIT alone at the higher dosages is better than TBZ, however still not fully satisfactory. Surprisingly, the mixture of TBZ and BBIT in the indicated ratio exhibits a much better efficacy than the respective active ingredients on their own. It shall be noted that the ppm data given in the table which are based on gypsum / plaster ($CaSO_4 \times 0,5\ H_2O$) correspond to approximately 0.8 x ppm value based on the wallboard.

**Example 3:** Gypsum board hand sheet efficacy testing (core protection)

According to WO2006/134347, mixtures of TBZ and Azoxystrobin (AZO) are disclosed with high suitability to protect wallboards against fungal decay. For comparison with the mixtures of the present invention, a comparative trial was carried out following the same principles as described in example 2. The results achieved in this test are summarized in table 3.

Table 3 Gypsum board hand sheet efficacy testing

| Comparison with a TBZ/AZO mixture from WO2006/134347 | | | |
|---|---|---|---|
| | **ppm** | **Fungi Mix[1)]** | **Stachybotris[2)]** |
| **control sample** | ***0*** | ***4*** | ***4*** |
| **TBZ** | ***25*** | ***4*** | ***4*** |
| **TBZ** | ***50*** | ***4*** | ***4*** |
| **TBZ** | ***100*** | ***4*** | ***4*** |
| **TBZ** | ***200*** | ***4*** | ***4*** |
| **TBZ** | ***300*** | ***3*** | ***3*** |
| | | | |
| **AZO** | ***25*** | ***4*** | ***4*** |
| **AZO** | ***50*** | ***4*** | ***4*** |
| **AZO** | ***100*** | ***4*** | ***4*** |
| **AZO** | ***200*** | ***4*** | ***4*** |
| **AZO** | ***300*** | ***4*** | ***4*** |
| | | | |
| **TBZ-AZO 1,3 : 1** | ***25*** | ***4*** | ***4*** |
| **TBZ-AZO 1,3 : 1** | ***50*** | ***4*** | ***4*** |
| **TBZ-AZO 1,3 : 1** | ***100*** | ***4*** | ***4*** |
| **TBZ-AZO 1,3 : 1** | ***200*** | ***4*** | ***3*** |
| **TBZ-AZO 1,3 : 1** | ***300*** | ***3*** | ***0*** |
| | | | |
| **TBZ-BBIT 1,3 : 1** | **25** | **4** | **4** |
| **TBZ-BBIT 1,3 : 1** | ***50*** | ***4*** | ***4*** |
| **TBZ-BBIT 1,3 : 1** | ***100*** | ***4*** | ***3*** |
| **TBZ-BBIT 1,3 : 1** | ***200*** | ***1*** | ***0*** |
| **TBZ-BBIT 1,3 : 1** | ***300*** | ***0*** | ***0*** |
| | | | |
| **BBIT** | ***25*** | ***4*** | ***4*** |
| **BBIT** | ***50*** | ***4*** | ***4*** |
| **BBIT** | ***100*** | ***4*** | ***4*** |
| **BBIT** | ***200*** | ***2*** | ***2*** |
| **BBIT** | ***300*** | ***1*** | ***1*** |
| 1) The Fungi Mix as indicated in table 3 is composed of the standard ASTM G 21-09 species extended by fungal species *Fusarium solani and Aspergillus hiratsukae*<br>2) Stachybotris means *Stachybotris chartarum* | | | |

Interpretation of table 3

WO2006/134347 describes mixtures based on TBZ and AZO as effective antimicrobials in gypsum wallboards. According to the test results, neither TBZ nor AZO alone are good enough to pass the ASTM G 21 test against the extended fungi mix as used in this test. By combining TBZ with AZO as indicated in table 3, they already show efficacy at a tested dosage of 300 ppm mixture (on dry stucco) an. However, in direct comparison, the new inventive combination of TBZ and BBIT does show a very good effect even at a lower dosage starting of 100 ppm for certain fungi. This is clearly superior over the prior art mixtures.

## Claims

1. A wallboard comprising a gypsum core and a facing layer, containing a fungicidally effective amount of thiabendazole (TBZ) and 2-butyl-1,2-benzisothiazolin-3-one (BBIT).

2. The wallboard according claim 1 wherein the facing layer is paper or glass fibre mat.

3. The Wallboard according to claim 1 or claim 2 comprising thiabendazole (TBZ), 2-butyl-1,2-benzisothiazolin-3-one (BBIT) without or with one or more actives, whereby the total amount of actives in the wallboard is from 10 ppm to 3000 ppm, preferably from 50 to 2000 ppm, preferably from 50 to 1000 ppm, even more preferred from 80 to 1000 ppm, in particular from 150 to 1000 ppm.

4. The Wallboard according to at least one of claims 1 to 3 comprising thiabendazole (TBZ), 2-butyl-1 ,2-benzisothiazolin-3-one (BBIT) without or with one or more actives, whereby if only applied to the gypsum core of the wallboard the total amount of actives in the wallboard is from 10 to 1000 ppm, preferably from 50 to 1000 ppm, even more preferred from 80 to 1000 ppm, in particular from 150 to 1000 ppm.

5. The Wallboard according to at least one of claims 1 to 4, consisting based on the total amount of actives more than 80 wt.-%, preferably more than 90 wt.-%, in particular more than 95 wt.-%, even more preferred more than 99 wt.-%, in particular 100 wt.% of TBZ and BBIT or of TBZ, BBIT and at least one further active selected from the group consisting of difenoconazole and fludioxonil, in particular fludioxonil.

6. The Wallboard according to at least one of claims 1 to 5, consisting based on the total amount of actives more than 99 wt.-%, in particular 100 wt.% of TBZ and BBIT.

7. Wallboard according to at least one of claims 1 to 6, wherein the weight ratio of TBZ and BBIT is from 20 : 1 to 1 : 20, in particular 10:1 to 1 : 10, in particular from 5 : 1 to 1 : 5.

8. The Wallboard according to at least one of claims 1 to 7, wherein the TBZ and BBIT are included in the gypsum core of the wallboard.

9. The Wallboard according to at least one of claims 1 to 8, wherein the TBZ and BBIT are included in or on the facing layer, which in particular is paper.

10. The Wallboard according to at least one of claims 1 to 9, wherein the fungicidally effective amount of thiabendazole (TBZ) and 2-butyl-1,2-benzisothiazolin-3-one (BBIT) is contained in the gypsum core, the facing layer, in particular the paper or in the gypsum core and the facing layer.

11. A process for manufacturing the wallboard according to at least one of the claims 1 to 10 wherein the wallboard is treated with a fungicidally effective amount of thiabendazole (TBZ) and 2-butyl-1,2-benzisothiazolin-3-one (BBIT) without or with one or more actives during the manufacturing process of said wallboard and/or thereafter.

12. A process for manufacturing the wallboard according to claim 11, wherein during the manufacturing process a fungicidally effective amount of thiabendazole (TBZ) and 2-butyl-1,2-benzisothiazolin-3-one (BBIT) without or with one or more actives are added

    a) to a gypsum slurry before the gypsum core is formed and/or
    b) to the surface of the gypsum core of the wallboard before the facing layer, in particular the paper is applied

and/or
c) to the facing layer process, in particular the paper making process, preferably to the paper pulp and/or
d) to the surface of the facing layer, in particular the paper layer.

**13.** The method according to at least one of claims 11 to 12 treating said wallboard with a fungicidally effective amount of a fungicide mixture comprising the TBZ and BBIT without or with one or more actives selected from the group consisting of difenoconazole and fludioxonil.

**14.** A paper product comprising a fungicide mixture comprising as actives TBZ and BBIT with or without one or more actives selected from the group consisting of difenoconazole and fludioxonil.

## Patentansprüche

**1.** Wandplatte, umfassend einen Gipskern und eine Deckschicht, enthalten eine fungizid wirksame Menge an Thiabendazol (TBZ) und 2-Butyl-1,2-benzisothiazolin-3-on (BBIT).

**2.** Wandplatte nach Anspruch 1, wobei es sich bei der Deckschicht um Papier oder eine Glasfasermatte handelt.

**3.** Wandplatte nach Anspruch 1 oder Anspruch 2, umfassend Thiabendazol (TBZ), 2-Butyl-1,2-benzisothiazolin-3-on (BBIT) ohne oder mit einem oder mehreren Wirkstoffen, wobei die Gesamtmenge an Wirkstoffen in der Wandplatte 10 ppm bis 3000 ppm, vorzugsweise 50 bis 2000 ppm, vorzugsweise 50 bis 1000 ppm, noch mehr bevorzugt 80 bis 1000 ppm, insbesondere 150 bis 1000 ppm beträgt.

**4.** Wandplatte nach mindestens einem der Ansprüche 1 bis 3, umfassend Thiabendazol (TBZ), 2-Butyl-1,2-benzisothiazolin-3-on (BBIT) ohne oder mit einem oder mehreren Wirkstoffen, wobei, wenn nur auf den Gipskern der Wandplatte angewendet, die Gesamtmenge an Wirkstoffen in der Wandplatte 10 bis 1000 ppm, vorzugsweise 50 bis 1000 ppm, noch mehr bevorzugt 80 bis 1000 ppm, insbesondere 150 bis 1000 ppm beträgt.

**5.** Wandplatte nach mindestens einem der Ansprüche 1 bis 4, bestehend, bezogen auf die Gesamtmenge an Wirkstoffen, aus mehr als 80 Gew.-%, vorzugsweise mehr als 90 Gew.-%, insbesondere mehr als 95 Gew.-%, noch mehr bevorzugt mehr als 99 Gew.-%, insbesondere 100 Gew.-%, TBZ und BBIT oder TBZ, BBIT und mindestens einem weiteren Wirkstoff ausgewählt aus der Gruppe bestehend aus Difenoconazol und Fludioxonil, insbesondere Fludioxonil.

**6.** Wandplatte nach mindestens einem der Ansprüche 1 bis 5, bestehend, bezogen auf die Gesamtmenge an Wirkstoffen, aus mehr als 99 Gew.-%, insbesondere 100 Gew.-%, TBZ und BBIT.

**7.** Wandplatte nach mindestens einem der Ansprüche 1 bis 6, wobei das Gewichtsverhältnis von TBZ zu BBIT 20 : 1 bis 1 : 20, insbesondere 10 : 1 bis 1 : 10, insbesondere 5 : 1 bis 1 : 5 beträgt.

**8.** Wandplatte nach mindestens einem der Ansprüche 1 bis 7, wobei das TBZ und BBIT im Gipskern der Wandplatte enthalten sind.

**9.** Wandplatte nach mindestens einem der Ansprüche 1 bis 8, wobei das TBZ und BBIT in oder auf der Deckschicht, bei der es sich insbesondere um Papier handelt, enthalten sind.

**10.** Wandplatte nach mindestens einem der Ansprüche 1 bis 9, wobei die fungizid wirksame Menge an Thiabendazol (TBZ) und 2-Butyl-1,2-benzisothiazolin-3-on (BBIT) im Gipskern, der Deckschicht, insbesondere dem Papier, oder im Gipskern und der Deckschicht enthalten ist.

**11.** Verfahren zur Herstellung der Wandplatte nach mindestens einem der Ansprüche 1 bis 10, wobei die Wandplatte während des Herstellungsverfahrens der Wandplatte und/oder im Anschluss daran mit einer fungizid wirksamen Menge an Thiabendazol (TBZ) und 2-Butyl-1,2-benzisothiazolin-3-on (BBIT) ohne oder mit einem oder mehreren Wirkstoffen behandelt wird.

**12.** Verfahren zur Herstellung der Wandplatte nach Anspruch 11, wobei während des Herstellungsverfahrens eine fungizid wirksame Menge an Thiabendazol (TBZ) und 2-Butyl-1,2-benzisothiazolin-3-on (BBIT) ohne oder mit einem

oder mehreren Wirkstoffen

a) vor der Bildung des Gipskerns einer Gipsaufschlämmung und/oder
b) der Oberfläche des Gipskerns der Wandplatte vor dem Aufbringen der Deckschicht, insbesondere des Papiers, und/oder
c) dem Deckschichtverfahren, insbesondere dem Papierherstellungsverfahren, vorzugsweise der Papierpulpe und/oder
d) der Oberfläche der Deckschicht, insbesondere der Papierschicht,

zugefügt wird.

**13.** Verfahren nach mindestens einem der Ansprüche 11 bis 12, bei dem die Wandplatte mit einer fungizid wirksamen Menge einer das TBZ und BBIT ohne oder mit einem oder mehreren Wirkstoffen ausgewählt aus der aus Difenoconazol und Fludioxonil bestehenden Gruppe umfassenden fungiziden Mischung behandelt wird.

**14.** Papierprodukt, umfassend eine fungizide Mischung, die als Wirkstoffe TBZ und BBIT mit oder ohne einem oder mehreren Wirkstoffen ausgewählt aus der aus Difenoconazol und Fludioxonil bestehenden Gruppe umfasst.

## Revendications

**1.** Panneau mural comprenant un noyau de gypse et une couche de parement, contenant une quantité efficace sur le plan fongicide de thiabendazole (TBZ) et de 2-butyl-1,2-benzisothiazolin-3-one (BBIT).

**2.** Panneau mural selon la revendication 1, la couche de parement étant un papier ou mat de de fibres de verre.

**3.** Panneau mural selon la revendication 1 ou la revendication 2 comprenant du thiabendazole (TBZ), de la 2-butyl-1,2-benzisothiazolin-3-one (BBIT) sans ou avec un ou plusieurs agents actifs, moyennant quoi la quantité totale d'agents actifs dans le panneau mural est de 10 ppm à 3 000 ppm, préférablement de 50 à 2 000 ppm, préférablement de 50 à 1 000 ppm, de manière encore plus préférée de 80 à 1 000 ppm, en particulier de 150 à 1 000 ppm.

**4.** Panneau mural selon au moins l'une des revendications 1 à 3 comprenant du thiabendazole (TBZ), de la 2-butyl-1,2-benzisothiazolin-3-one (BBIT) sans ou avec un ou plusieurs agents actifs, moyennant quoi, s'ils sont appliqués seulement sur le noyau de gypse du panneau mural, la quantité totale d'agents actifs dans le panneau mural est de 10 à 1 000 ppm, préférablement de 50 à 1 000 ppm, de manière encore plus préférée de 80 à 1 000 ppm, en particulier de 150 à 1 000 ppm.

**5.** Panneau mural selon au moins l'une des revendications 1 à 4, constitué, sur la base de la quantité totale d'agents actifs, de plus de 80 % en poids, préférablement plus de 90 % en poids, en particulier plus de 95 % en poids, de manière encore plus préférée plus de 99 % en poids, en particulier de 100 % en poids de TBZ et de BBIT ou de TBZ, de BBIT et d'au moins un agent actif supplémentaire choisi dans le groupe constitué par le difénoconazole et le fludioxonil, en particulier le fludioxonil.

**6.** Panneau mural selon au moins l'une des revendications 1 à 5, constitué, sur la base de la quantité totale d'agents actifs, de plus de 99 % en poids, en particulier de 100 % en poids de TBZ et de BBIT.

**7.** Panneau mural selon au moins l'une des revendications 1 à 6, le rapport en poids de TBZ et de BBIT étant de 20 : 1 à 1 : 20, en particulier 10 : 1 à 1 : 10, en particulier de 5 : 1 à 1 : 5.

**8.** Panneau mural selon au moins l'une des revendications 1 à 7, le TBZ et la BBIT étant compris dans le noyau de gypse du panneau mural.

**9.** Panneau mural selon au moins l'une des revendications 1 à 8, le TBZ et la BBIT étant compris dans ou sur la couche de parement, qui est en particulier du papier.

**10.** Panneau mural selon au moins l'une des revendications 1 à 9, la quantité efficace sur le plan fongicide de thiabendazole (TBZ) et de 2-butyl-1,2-benzisothiazolin-3-one (BBIT) étant contenue dans le noyau de gypse, la couche de parement, en particulier le papier ou dans le noyau de gypse et la couche de parement.

**11.** Procédé pour la fabrication du panneau mural selon au moins l'une des revendications 1 à 10, le panneau mural étant traité avec une quantité efficace sur le plan fongicide de thiabendazole (TBZ) et de 2-butyl-1,2-benzisothiazolin-3-one (BBIT) sans ou avec un ou plusieurs agents actifs pendant le procédé de fabrication dudit panneau mural et/ou après celui-ci.

**12.** Procédé pour la fabrication du panneau mural selon la revendication 11, pendant le procédé de fabrication, une quantité efficace sur le plan fongicide de thiabendazole (TBZ) et de 2-butyl-1,2-benzisothiazolin-3-one (BBIT) sans ou avec un ou plusieurs agents actifs étant ajoutée

a) à une suspension de gypse avant que le noyau de gypse ne soit formé et/ou
b) à la surface du noyau de gypse du panneau mural avant que la couche de parement, en particulier le papier, ne soit appliqué(e) et/ou
c) au procédé de couche de parement, en particulier le procédé de préparation du papier, préférablement à la pâte de papier et/ou
d) à la surface de la couche de parement, en particulier la couche de papier.

**13.** Procédé selon au moins l'une des revendications 11 à 12 traitant ledit panneau mural avec une quantité efficace sur le plan fongicide d'un mélange de fongicides comprenant le TBZ et la BBIT sans ou avec un ou plusieurs agents actifs choisis dans le groupe constitué par le difénoconazole et le fludioxonil.

**14.** Produit de papier comprenant un mélange de fongicides comprenant en tant qu'agents actifs du TBZ et de la BBIT avec ou sans un ou plusieurs agents actifs choisis dans le groupe constitué par le difénoconazole et le fludioxonil.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006134347 A
- US 2015203660 A
- JP 2003267806 A
- EP 2499911 A


### Non-patent literature cited in the description


- *CHEMICAL ABSTRACTS,* 148-79-8
- *CHEMICAL ABSTRACTS,* 4299-07-4
- *CHEMICAL ABSTRACTS,* 185336-79-2
- **F. C. KULL ; P. C. ELISMAN ; H. D. SYLWESTROWICZ ; P. K. MAYER.** *Appl. Microbiol.,* 1961, vol. 9, 538